# EUROPÄISCHE PATENTANMELDUNG

(11) **EP 4 664 093 A1**
(43) Veröffentlichungstag der Anmeldung: **17.12.2025**
(21) Anmeldenummer: 25181410.9
(22) Anmeldetag: 06.06.2025
(51) Int. Cl.: G01N 21/03, G01N 21/552, G01N 21/35

(54) **LUFTDICHTE UND BEHEIZBARE ZELLE ZUR FTIR-SPEKTROSKOPISCHEN UNTERSUCHUNG VON BATTERIEAUFBAUTEN**

(30) Priorität: 10.06.2024 DE 102024116133
(71) Anmelder: Forschungszentrum Jülich GmbH, 52428 Jülich (DE)
(72) Erfinder: Weiling, Matthias, 48145 Münster (DE); Baghernejad, Dr. Masoud, 48341 Altenberge (DE); Pfeiffer, Felix, 48151 Münster (DE); Wang, Jian-Fen, 48149 Münster (DE); Guerdelli, Rayan, 48167 Münster (DE)
(74) Vertreter: Michalski Hüttermann & Partner Patentanwälte mbB

(57) **Zusammenfassung**

Luftdichte Zelle zur ATR-FTIR-spektroskopischen Untersuchung elektrochemischer Elektroden- und Elektrolytvorgänge, wobei die Zelle (100) ausgehend von einer unteren Auflagefläche zu einem FTIR-Spektrometer bis hin zu einem oberen Abschluss der Zelle (100) umfasst: einen Arbeitselektroden-Stromableiter (4) eingerichtet zur elektrischen Kontaktierung einer Arbeitselektrode (3), einen Aufnahmeraum geeignet zur Aufnahme eines Elektrodenaufbaus umfassend eine Arbeitselektrode (3), einen Elektrolyten (6) und eine Gegenelektrode (7); sowie oberhalb des Aufnahmeraumes einen ersten Gegenelektroden-Stromableiter (11) eingerichtet zur elektrischen Kontaktierung der Gegenelektrode (7) des Elektrodenaufbaus. Der erste Gegenelektroden-Stromableiter (11) kontaktiert über ein Federelement (16) einen zweiten Gegenelektroden-Stromableiter (18) mechanisch und elektrisch. Eine Heizmanschette (8) aufweisend ein elektrisches Heizelement (13) kontaktiert zumindest einen Teiloberflächenbereich des ersten Gegenelektroden-Stromableiters (11) in thermisch leitender Verbindung.

## Beschreibung

Die vorliegende Erfindung betrifft eine luftdichte Zelle zur FTIR-spektroskopischen Untersuchung elektrochemischer Elektroden- und Elektrolytvorgänge, wobei die Zelle über einen spezifischen Aufbau mit einer Heizmanschette umfassend ein elektrisches Heizelement verfügt.

Batterien bilden wichtige elektrische Energiespeicher und sind vor allem für mobile Anwendungen, wie beispielsweise Laptops, Smartphones oder generell die elektrische Mobilität, aus unserem täglichen Leben nicht mehr wegzudenken. Das sich über die Zeit ein breiteres und markttauglicheres Angebot an technischen Lösungen ergeben hat ist darauf zurückzuführen, dass die Leistungsfähigkeit und Langlebigkeit, insbesondere wiederaufladbarer Batterietypen, in den letzten Jahrzehnten deutlich gesteigert werden konnten. Trotz der erzielten Verbesserungen wurden und werden aber immer noch verschiedenste Ladungsträgersysteme untersucht, um die Leistung der Batterien zu erhöhen und die Kosten zu reduzieren. Ein wichtiger Faktor für die Funktionalität der Systeme ist das reversible Laden und Entladen der Batterien, welches im Wesentlichen durch die elektrochemischen Vorgänge an den Elektroden und im Elektrolyten beeinflusst und bestimmt wird. Insofern ist es für die Anwendung und die Forschung wichtig, dass man maßgeschneiderte Möglichkeiten zur analytischen Betrachtung der Elektrodenvorgänge hat. Um neben Flüssigelektrolyten auch Feststoffelektrolyte, Polymerelektrolyte, Gel/Fest-Flüssig-Elektrolyte, oder Mischungen aus den genannten Elektrolyten und die gebildeten Grenzflächen und Grenzschichten in Batterien realgetreu untersuchen zu können, müssen hierbei verschiedene Anforderungen an die Messzelle erfüllt sein. So muss eine geeignete spektro-elektrochemische Zelle beispielsweise luftdicht sein und es sollten verschiedenste Elektroden-, sowie Elektrolytmaterialien verwendet werden können. Zur Durchführung von Untersuchungen in einem weiten Zustandsbereich an Umgebungsbedingungen wäre es des Weiteren wünschenswert, wenn zusätzliche Umgebungs- und Betriebsparameter genau kontrolliert und einfach und kostengünstig beeinflusst werden könnten. Dies ist insofern für die Untersuchung von Feststoffelektrolyt oder Polymerelektrolyten wichtig, da deren Eigenschaften, wie ionische Leitfähigkeit oder Viskosität, erst bei Temperaturen ab circa 50°C passend für die Anwendung in Batterien sind.

Auch in der Patentliteratur finden sich die unterschiedlichsten FTIR-Aufbauten zur Untersuchung elektrochemischer Elektrodenvorgänge.

So beschreibt beispielsweise die JP 2013 124 862 A eine infrarotspektroskopische Vorrichtung umfassend eine Arbeitselektrode, die in einen Elektrolyten eingetaucht ist, eine gepaarte Elektrode, die mit der Arbeitselektrode gepaart ist, eine Referenzelektrode, die ein Potential der Arbeitselektrode angibt, und ein Prisma, dessen Unterseite mit der Arbeitselektrode in Kontakt gebracht wird. Infrarotlicht wird auf eine Grenzfläche zwischen dem Prisma und der Arbeitselektrode eingestrahlt und an der Grenzfläche reflektiert, und das Spektrum des vom Prisma 4 emittierten Reflexionslichts wird von einem Detektorerfasst. Auf diese Weise wird die Intensität des gesamten Reflexionslichts des Infrarotlichts auf der Elektrode gemessen. Das Prisma besteht aus Diamant.

In der JP 2012 202 951 A1 ist eine infrarotspektroskopische Analysevorrichtung beschrieben, die ein Verfahren der abgeschwächten Totalreflexion (ATR) verwendet, Die Vorrichtung umfasst ein Totalreflexionsprisma mit einem Prismengrundmaterial und einem Metalloxidfilm, der auf einer Bodenfläche des Grundmaterials vorgesehen ist; eine Arbeitselektrode, die auf der Oberfläche des Materialfilms angeordnet ist; eine Gegenelektrode, die mit der Arbeitselektrode gepaart ist; eine Referenzelektrode, die ein Potential der Arbeitselektrode definiert; und eine Grenzfläche zwischen dem Basismaterial und dem Metalloxidfilm durch das Prismenbasismaterial Infrarotspektroskopie mit einem optischen System, das Infrarotlicht empfängt, reflektiertes Licht sammelt, das an der Grenzfläche reflektiert wird und dann aus dem Prisma austritt, und einem Infrarotspektrometer zum Erhalten eines Spektrums des reflektierten Lichts.

Weiterhin offenbaren Weiling et al. in Adv. Energy Mater. 2024, 14, 2303568, DOI:10.1002/aenm.202303568 "Mechanistic Understanding of Additive Reductive Degradation and SEI Formation in High-Voltage NMC811∥SiOx-Containing Cells via Operando ATR-FTIR Spectroscopy" einen Aufbau für eine ATR-FTIR-spektroskopische Zelle.

Vor diesem Hintergrund des Standes der Technik ist es daher Aufgabe der Erfindung, einen verbesserten Aufbau für eine ATR-FTIR-spektroskopische Zelle bereitzustellen. Insbesondere soll mit der erfindungsgemäßen Vorrichtung eine einfache und gleichmäßige Temperierung des zu untersuchenden Elektroden- und Elektrolytaufbaus ermöglicht werden.

Diese Aufgabe der Erfindung wird mit einer Zelle mit den im Anspruch 1 angegebenen Merkmalen gelöst. Bevorzugte Weiterbildungen der Erfindung sind in den zugehörigen Unteransprüchen, der nachfolgenden Beschreibung und den Zeichnungen angegeben.

Erfindungsgemäß ist dementsprechend eine Zelle zur ATR-FTIR-spektroskopischen Untersuchung elektrochemischer Elektroden- und Elektrolytvorgänge, wobei die Zelle ausgehend von einer unteren Auflagefläche zu einem FTIR-Spektrometer bis hin zu einem oberen Abschluss der Zelle umfasst: einen Arbeitselektroden-Stromableiter eingerichtet zur elektrischen Kontaktierung einer Arbeitselektrode, einen Aufnahmeraum geeignet zur Aufnahme eines Elektrodenaufbaus umfassend eine Arbeitselektrode, einen Elektrolyten und eine Gegenelektrode; sowie oberhalb des Aufnahmeraumes einen ersten Gegenelektroden-Stromableiter eingerichtet zur elektrischen Kontaktierung der Gegenelektrode des Elektrodenaufbaus, wobei der erste Gegenelektroden-Stromableiter über ein Federelement einen zweiten Gegenelektroden-Stromableiter mechanisch und elektrisch kontaktiert, wobei eine Heizmanschette aufweisend ein elektrisches Heizelement zumindest einen Teiloberflächenbereich des ersten Gegenelektroden-Stromableiters in thermisch leitender Verbindung kontaktiert.

Überraschenderweise wurde gefunden, dass sich über den oben angegebenen Zellaufbau eine kostengünstige, verlässliche und sehr genaue Zell- und damit Elektroden- und Elektrolyttemperatursteuerung realisieren lässt, welche das Einsatzspektrum der Zelle deutlich erweitert. Es können Elektroden- und Elektrolytreaktionen bei unterschiedlichen Temperaturbedingungen verfolgt werden. Zudem sind auch Untersuchungen zum Einfluss zyklischer Temperaturänderungen auf die Elektroden- und Elektrolytvorgänge unterschiedlicher Elektrodenmaterialien möglich. Dieser Aufbau ist im Vergleich zu bestehenden Zellaufbauten vorteilhaft, da bestehende Zellen zwar luftdicht sind und in Einzelfällen die Untersuchung verschiedenster Elektrodenmaterialien ermöglichen, dennoch fehlt diesen Aufbauten die Fähigkeit zur genauen Temperaturkontrolle. Im erfindungsgemäßen Aufbau kann mittels einer Steuerungseinheit das in der Zelle integrierte Heizelement gesteuert und derart die Zelltemperatur verändert werden. Weiterhin ist am vorliegenden Aufbau vorteilhaft, dass neben der Untersuchung der Elektroden-Grenzfläche auch, gleichzeitig, die Untersuchung des darüberliegenden Elektrolyten erfolgen kann. Der Aufbau zielt insbesondere auf die Untersuchung von Grenzflächen- bzw. - schichten ab, wobei für die Elektroden unterschiedlichste Elektrodenmaterialien eingebaut werden können. Dies ist deutlich vorteilhafter als die Verwendung in der Zelle fest verbauter Elektroden, welche dann natürlich auf das eingebaute Elektrodenmaterial beschränkt sind. Letzteres ist insbesondere deshalb relevant, da in bekannten Aufbauten Goldelektroden verwendet werden. Goldelektroden entsprechen jedoch nicht den realen Elektroden aus Batteriezellen. Somit können diese Zellen nicht für die Untersuchung batterie-relevanter Elektroden verwendet werden. Weitere Vorteile der neuen Zelles ergeben sich durch die einfache Anpassbarkeit und einen deutlich geringeren Preis, da die Zelle prinzipiell 3D-druckbar ist. Zudem lassen sich flüssige,feste und hybride Elektrolyte untersuchen.

Die Zelle ist zur ATR-FTIR-spektroskopischen Untersuchung elektrochemischer Elektroden- und Elektrolytvorgänge geeignet. Die Zelle ist dazu konzipiert, auf einen ATR-Kristall eines FTIR-Spektrometers aufsetzbar zu sein. Die Zelle umfasst somit selbst keine Aufbauten zur Durchführung der FTIR-Messungen, sondern stellt "nur" den Probenraum bereit, welcher mit unterschiedlichen Elektroden- und Elektrolytaufbauten befüllt werden kann. Unter ATR-Infrarotspektroskopie ("attenuated total reflection", abgeschwächte Totalreflexion') wird eine Messtechnik der Infrarotspektroskopie (IR-Spektroskopie) verstanden, welche Oberflächenuntersuchung fester oder flüssiger Proben durch die Untersuchung der Wechselwirkung des Systems mit Licht eines bestimmten Wellenlängenspektrums ermöglicht. Durch die Analyse der Intensität eines zurückgestreuten oder zurückreflektierten Lichtes lassen sich Rückschlüsse über die chemische Zusammensetzung und die Eigenschaften der Probe erhalten. Die Zelle kann beispielsweise über einen SLA-Druck aus Composite-X (Liqcreate) hergestellt sein. Eine alternative 3D-Druck-Herstellmethode wäre SLS, wobei in dieser PP oder FDM verwendet werden kann. Weniger bevorzugt können auch ablative Herstellungsmethoden, wie beispielsweise Drehen oder Fräsen, zur Fertigung des Gehäuses verwendet werden. Die Zelle kann leicht, beispielsweise über Dichtungen, luftdicht eingerichtet werden. Mittels dieser Zelle lassen sich elektrochemische Vorgänge an unterschiedlichen Elektroden sowie in unterschiedlichen Elektrolyten verfolgen.

Die Zelle erstreckt sich ausgehend von einer unteren Auflagefläche zu einem FTIR-Spektrometer bis hin zu einem oberen Abschluss der Zelle. Die Zelle wird also auf den ATR-Kristall befestigt und das zur Untersuchung verwendete Licht wird von unten durch den ATR-Kristall in die Zelle gestrahlt. Die im Weiteren beschriebene Abfolge der einzelnen Gehäuseteile ergibt sich demzufolge in einer Anordnung von unten, dem Zellboden ggf. im Kontakt zu einem ATR-Kristall, nach oben, dem Zelleabschluss, hin.

Die Zelle umfasst einen Arbeitselektroden-Stromableiter eingerichtet zur elektrischen Kontaktierung einer Arbeitselektrode. Zur Untersuchung von Elektrodenvorgängen eines Elektrodenaufbaus ist die Zelle mit einem Arbeitselektroden-Stromableiter ausgestattet, welcher bei dem Einbau eines zu untersuchenden Elektrodenaufbaus in der Lage ist, elektrische Signale von der Arbeitselektrode oder an die Arbeitselektrode weiterzuleiten. Zur Erfüllung dieses Zweckes kontaktiert bei einem Zusammenbau der Zell mit eingebauter Elektrode der Arbeitselektroden-Stromableiter die Elektrode elektrisch. Der Arbeitselektroden-Stromableiter kann beispielsweise aus Kupfer, Nickel, Edelstahl oder Aluminium gefertigt und in Form einer flachen Scheibe ausgestaltet sein. Die flache Scheibe kann ein Loch in der Mitte enthalten, in welches die Arbeitselektrode platziert werden kann. Der Arbeitselektroden-Stromableiter weist bevorzugt eine äußere elektrische Kontaktierungsstelle auf, an welcher die elektrischen Signale abgegriffen werden können. Der Arbeitselektroden-Stromableiter ist direkt unterhalb des Aufnahmeraumes für einen Elektrodenaufbau angeordnet.

Die Zelle umfasst einen Aufnahmeraum geeignet zur Aufnahme eines Elektrodenaufbaus umfassend eine Arbeitselektrode, einen Elektrolyten und eine Gegenelektrode. Die Zelle kann den zu untersuchenden Elektrodenaufbau aufnehmen. Dies erfolgt im Aufnahmeraum, in welchen der zu untersuchende Aufbau eingebaut wird. Der Elektrodenaufbau umfasst dabei mindestens eine untere Arbeitselektrode und eine obere Gegenelektrode, welche durch einen Elektrolyten getrennt sind. Je nach Aufbau kann der Elektrolyt fest, flüssig oder gelförmig sein. Für die Stromableiter der Arbeits- und die Gegenelektrode können unterschiedliche Metalle verwendet werden. Insbesondere sind der Aufbau und die chemische Zusammensetzung des zu untersuchenden Elektrodenaufbaus nicht durch die Eigenschaften und den prinzipiellen Aufbau der Zelle beschränkt. Im Falle der Untersuchung flüssiger Elektrolyte können der Einbau von Dichtungen nötig oder vorteilhaft sein.

Die Zelle umfasst oberhalb des Aufnahmeraumes einen ersten Gegenelektroden-Stromableiter eingerichtet zur elektrischen Kontaktierung der Gegenelektrode des Elektrodenaufbaus. Zur Erfassung oder zur Einstellung der elektrischen Eigenschaften des Elektrodenaufbaus wird die Gegenelektrode des Elektrodenaufbaus über die Zelle durch einen Gegenelektroden-Stromableiter kontaktiert. Dieser ermöglicht zusammen mit dem Arbeitselektroden-Stromableiter die elektrische Kontaktierung des Elektrodenaufbaus. Bevorzugt kann der Gegenelektroden-Stromableiter aus Kupfer, Nickel, Edelstahl oder Aluminium gefertigt sein und eine Dicke von größer oder gleich 5 mm und kleiner oder gleich 25 mm aufweisen.

Der erste Gegenelektroden-Stromableiter kontaktiert über ein Federelement einen zweiten Gegenelektroden-Stromableiter mechanisch und elektrisch. Zur Ableitung der elektrischen Signale der Gegenelektrode wird eine leitende Verbindung über einen ersten und einen zweiten Gegenelektroden-Stromableiter verwendet. Die Verbindung des ersten und des zweiten Gegenelektroden-Stromableiters erfolgt dabei durch ein Federelement, welches neben der elektrischen Kontaktierung auch noch für die mechanische Kontaktierung des gesamten Elektroden- und Elektrolytaufbaus verantwortlich ist. Über das Federelement werden mechanische Kräfte auf den ersten Gegenelektroden-Stromableiter und damit auf den Elektroden- und Elektrolytaufbau ausgeübt, welches zu einem guten elektrischen Kontakt der einzelnen Teile untereinander beiträgt. Des Weiteren kann der Aufbau über diesen Anpressdruck auch gedichtet werden. Als Federelemente eignen sich beispielsweise Spiralfedern, Wellenfedern oder konische Federn. Geeignete Federkonstanten der Federelemente können beispielsweise größer oder gleich 100 N/m und kleiner oder gleich 50000 N/m betragen.

Die Zelle umfasst eine Heizmanschette aufweisend ein elektrisches Heizelement, welches zumindest einen Teiloberflächenbereich des ersten Gegenelektroden-Stromableiters in thermisch leitender Verbindung kontaktiert. Im Inneren der Zelle ist eine Heizmanschette angeordnet, welche letztendlich die Temperierung des Elektrodenaufbaus über eine thermische Kontaktierung zumindest des Gegenelektroden-Stromableiters ermöglicht. Die Heizmanschette kann natürlich auch noch weitere Teile des Aufbaus umfassen. Die Heizmanschette wird durch das Zellgehäuse umschlossen und ist erfindungsgemäß nicht an der Außenseite des Zelles angeordnet. Dies kann eine verbesserte Wärmeleitung ermöglichen. Als Heizelement kann bevorzugt ein elektrisches Heizelement verwendet werden. Bevorzugt kann das Heizelement durch eine oder mehrere elektrische Leitungen mit einer Heizungssteuerung verbunden sein, welche dazu eingerichtet ist, die Temperatur des Heizelementes zu steuern. Das Heizelement kann beispielsweise dazu eingerichtet sein, eine Temperatur in einem Bereich von 20°C bis zu 500°C zu realisieren. Bevorzugt kann das Heizelement ein Volumen von 10% bis 50% bezogen auf das Volumen der Heizmanschette einnehmen. Die Heizmanschette kann das Heizelement beispielsweise an drei Seiten oder gänzlich umfassen.

In einer weiter bevorzugten Ausführungsform der Zelle kann der erste Gegenelektroden-Stromableiter zylindrisch ausgestaltet sein und die Heizmanschette mindestens 70% der äußeren Mantelfläche des ersten Gegenelektroden-Stromableiters kontaktieren. Zur verbesserten thermischen Kontaktierung des ersten Gegenelektroden-Stromableiters hat es sich als besonders vorteilhaft herausgestellt, dass mindestens ein Großteil der äußeren Fläche des ersten Gegenelektroden-Stromableiters von der Heizmanschette umfasst wird. Es können schnelle Temperaturwechsel initiiert werden und die Temperaturverteilung am ersten Gegenelektroden-Stromableiter ist sehr gleichmäßig. Eine zylindrische Ausgestaltung meint in diesem Fall, dass der erste Gegenelektroden-Stromableiter eine runde Grundfläche aufweist. Die Höhe des ersten Gegenelektroden-Stromableiters ist größer als der Durchmesser der Grundfläche. Bevorzugt kann die Heizmanschette größer oder gleich 80% und kleiner oder gleich 100%, des Weiteren größer oder gleich 90% und kleiner oder gleich 100%, der äußeren Mantelfläche des ersten Gegenelektroden-Stromableiters thermisch kontaktieren. Die äußere Mantelfläche ergibt sich aus der Zylinderoberfläche abzüglich der Fläche der runden Grundflächen.

In einer bevorzugten Charakteristik der Zelle kann der Aufnahmeraum zylindrisch ausgestaltet sein und die Heizmanschette mindestens 70% der äußeren Mantelfläche des Aufnahmeraumes umfassen. Zur verbesserten thermischen Kontaktierung des Aufnahmeraumes hat es sich als besonders vorteilhaft herausgestellt, dass mindestens ein Großteil der äußeren Fläche des Aufnahmeraumes von der Heizmanschette umfasst wird. Es können schnelle Temperaturwechsel initiiert werden und die Temperaturverteilung im Aufnahmeraum ist sehr gleichmäßig. Eine zylindrische Ausgestaltung meint in diesem Fall, dass der Aufnahmeraum eine runde Grundfläche aufweist. Die Höhe des Aufnahmeraumes ist größer als der Durchmesser der Grundfläche. Bevorzugt kann die Heizmanschette größer oder gleich 80% und kleiner oder gleich 100%, des Weiteren größer oder gleich 90% und kleiner oder gleich 100%, der äußeren Mantelfläche des Aufnahmeraumes thermisch kontaktieren. Bevorzugt kann die Heizmanschette die angegebenen Oberflächenbereiche des ersten Gegenelektroden-Stromableiters und des Aufnahmeraumes kontaktieren.

In einer weiterhin bevorzugten Charakteristik der Zelle kann die Heizmanschette dazu eingerichtet sein einen Thermofühler aufzunehmen. Zur verbesserten Regelung der Temperatur des Aufnahmeraumes hat es sich als günstig herausgestellt, dass in die Heizmanschette ein Temperaturfühler integriert sein kann. Dazu kann die Heizmanschette beispielsweise eine Bohrung oder ein Loch aufweisen. Bevorzugt kann die Bohrung größer oder gleich 1 mm und kleiner oder gleich 30 mm von der Heizeinrichtung entfernt angebracht sein. Es hat sich als günstig herausgestellt, dass die Heizvorrichtung nicht zu nahe am Temperaturfühler angeordnet ist. Das kann die Reproduzierbarkeit der Temperatursteuerung und -regelung sowie möglicher Aufheiz- und Kühlrampen erhöhen. Die Heizmanschette kann den Thermofühler beispielsweise durch eine mechanische Klemmung aufnehmen. Es ist aber auch möglich, dass der Thermofühler mittels einer Wärmepaste in die Heizmanschette eingeklebt wird. Alternativ oder zusätzlich kann der Thermofühler mit einer oder mehreren (Maden)schrauben in der Heizmanschette fixiert werden.

In einer bevorzugten Ausführungsform der Zelle kann das elektrische Heizelement eine elektrische Widerstandsheizung sein. Zur möglichst effizienten und flexiblen Temperierung des Elektroden- und Elektrolytaufbaus hat sich die Verwendung einer Widerstandsheizung als besonders geeignet herausgestellt. Die Zelle kann über weite Temperaturbereiche besonders genau temperiert werden. Bevorzugt kann die Widerstandsheizung eine Leistung von größer oder gleich 20 W und kleiner oder gleich 200 W vorweisen. Dabei kann die Widerstandsheizung bevorzugt eine Länge von größer oder gleich 5 mm bis kleiner oder gleich 30 mm und einen Durchmesser von größer oder gleich 2 mm bis kleiner oder gleich 15 mm vorweisen. Die Widerstandsheizung kann bevorzugt die Temperatur im Bereich größer oder gleich 0°C bis kleiner oder gleich 500°C halten.

In einer weiter bevorzugten Ausgestaltung der Zelle kann der erste Gegenelektroden-Stromableiter zu größer oder gleich 80 Gew.-% und kleiner oder gleich 100 Gew.-% aus Kupfer bestehen, wobei zumindest die Kontaktfläche des ersten Gegenelektroden-Stromableiter zum Federelement eine Goldbeschichtung aufweisen kann. Zur möglichst effizienten thermischen und elektrischen Kontaktierung hat es sich als besonders geeignet herausgestellt, dass der erste Gegenelektroden-Stromableiter überwiegend aus Kupfer besteht und zusätzlich noch eine Goldbeschichtung aufweist. Die Goldbeschichtung ist auf der Oberfläche aufgebracht, welche das Federelement kontaktiert. Bevorzugt kann nur diese Fläche eine Goldbeschichtung aufweisen. Die Goldbeschichtung kann beispielsweise eine Dicke von 0,5 - 100 µm aufweisen.

In einer weiter bevorzugten Ausführungsform der Zelle kann der erste Gegenelektroden-Stromableiter zylindrisch ausgestaltet sein und eine minimale Ausdehnung in Richtung der Zylinderachse von größer oder gleich dem 4fachen und kleiner oder gleich dem 10fachen bezogen auf die maximale Ausdehnung des Aufnahmeraumes aufweisen. Es hat sich als sehr geeignet herausgestellt, dass der erste Gegenelektroden-Stromableiter eine Höhe im oben angegebenen Bereich aufweist. In diesem Höhenbereich lässt sich eine sichere mechanische, elektrische und thermische Kontaktierung des Aufnahmeraumes erreichen. Zudem kann über die in diesem Größenbereich zur Verfügung gestellte Masse des ersten Gegenelektroden-Stromableiters ein hinreichendes thermisches Reservoir bereitgestellt werden, welches größere Temperaturschwankungen an dem Aufnahmeraum vermeidet.

In einer bevorzugten Charakteristik der Zelle kann das elektrische Heizelement zu größer oder gleich 80 Gew.-% und kleiner oder gleich 100 Gew.-% aus Kupfer bestehen und an der Oberfläche beschichtet sein, wobei die Beschichtung ausgewählt ist aus der Gruppe bestehend aus AlN, Al₂O₃, BN, Glimmer oder Mischungen mindestens zweier Verbindungen aus dieser Liste. Zu elektrischen Isolierung des Heizelementes und zur Verringerung von elektrischen Störeinflüssen hat es sich als günstig herausgestellt, dass auf der Oberfläche des Heizelementes eine isolierende Beschichtung aufgebracht wird. Entgegen der Annahme des Fachmanns reduziert diese die thermischen Eigenschaften nur unwesentlich, erhöht aber die elektrische Störsicherheit des Aufbaus.

In einer weiter bevorzugten Ausgestaltung der Zelle kann die Heizmanschette von dem Arbeitselektroden-Stromableiter elektrisch entkoppelt sein. Zur Verringerung elektrischen Störeinflüsse hat es sich zudem als günstig erwiesen, dass die Heizmanschette vom Arbeitselektroden-Stromableiter elektrisch entkoppelt ist. Dies kann beispielsweise durch eine nicht leitende Beschichtung auf der Oberfläche der Heizmanschette erreicht werden. Geeignete Beispiele für nicht-leitende Beschichtungen sind weiter oben angegeben. Weiterhin kann es jedoch vorteilhaft sein, dass die elektrisch nicht-leitende Beschichtung eine bevorzugt gute thermische Leitfähigkeit aufweist. Dazu kann die Beschichtung beispielsweise aus Glimmer bestehen. Bevorzugt weist die elektrisch nicht-leitende Beschichtung eine thermische Leitfähigkeit von größer oder gleich 100 W m⁻¹ K⁻¹ auf. Bevorzugt kann die Beschichtung eine Schichtdicke von größer oder gleich 0,1 mm und kleiner oder gleich 5 mm aufweisen. Anstatt oder zusätzlich zu einer Beschichtung kann auch eine thermisch leitende und elektrisch nicht-leitende Schicht oder Platte, z.B. aus Glimmer, zwischen Heizmanschette und Arbeitselektroden-Stromableiter platziert werden. Alternativ können beide Teile durch einen O-Ring aus Gummi, Teflon, PEEK, o.ä. sowohl elektrisch wie auch thermisch voneinander entkoppelt werden.

In einer bevorzugten Ausführungsform der Zelle kann das Federelement zu größer oder gleich 80 Gew.-% und kleiner oder gleich 100 Gew.-% aus Edelstahl bestehen und auf der Oberfläche eine Goldbeschichtung aufweisen. Zur besonders geeigneten elektrischen und mechanischen Kontaktierung hat es sich als günstig herausgestellt, dass das Federelement zu einem überwiegenden Anteil aus Edelstahl ausgeführt ist, wobei das Federelement auf der Oberfläche eine Goldschicht aufweist. Bevorzugt kann das Federelement neben der Oberflächenbeschichtung aus Edelstahl bestehen.

In einer weiter bevorzugten Ausgestaltung der Zelle kann der zweite Gegenelektroden-Stromableiter zu größer oder gleich 80 Gew.-% und kleiner oder gleich 100 Gew.-% aus Edelstahl bestehen. Optional kann der zweite Gegenelektroden-Stromableiter auch mit einer Goldbeschichtung versehen sein. Innerhalb dieser Zusammensetzungen lassen sich elektrisch sehr geeignete zweite Gegenelektroden-Stromableiter erhalten, welche beispielsweise eine geringere Wärmeableitung zeigen als Kupfer Stromableiter. Die Temperaturführung des Zellaufbaus wird dadurch verbessert.

Weiterhin kann eine Zelle vorteilhaft sein, wobei die Zelle dazu eingerichtet ist, dass die Position des zweiten Gegenelektroden-Stromableiters innerhalb der Zelle mechanisch fixiert werden kann. Die Fixierung des zweiten Gegenelektroden-Stromableiters kann dabei beispielsweise mittels eines Stellrings erfolgen.

Des Weiteren erfindungsgemäß ist die Verwendung der erfindungsgemäßen Zelle zur Untersuchung von Elektrodenaufbauten aus mindestens einer Elektrode und einen die Elektrodenoberfläche kontaktierenden Elektrolyten.

Beispiele und Ausführungsformen der vorliegenden Erfindung werden noch in exemplarischer Weise mit Bezug auf die Figuren 1 bis 3 beschrieben:
Figur 1 zeigt schematisch den Aufbau einer erfindungsgemäßen ATR-FTIR-Zelle
Figuren 2A-D zeigen schematisch ein erfindungsgemäß einsetzbares Heizelement in unterschiedlichen Ansichten;
Figuren 3A-D zeigen schematisch ein erfindungsgemäß einsetzbares Zellgehäuse in unterschiedlichen Ansichten.

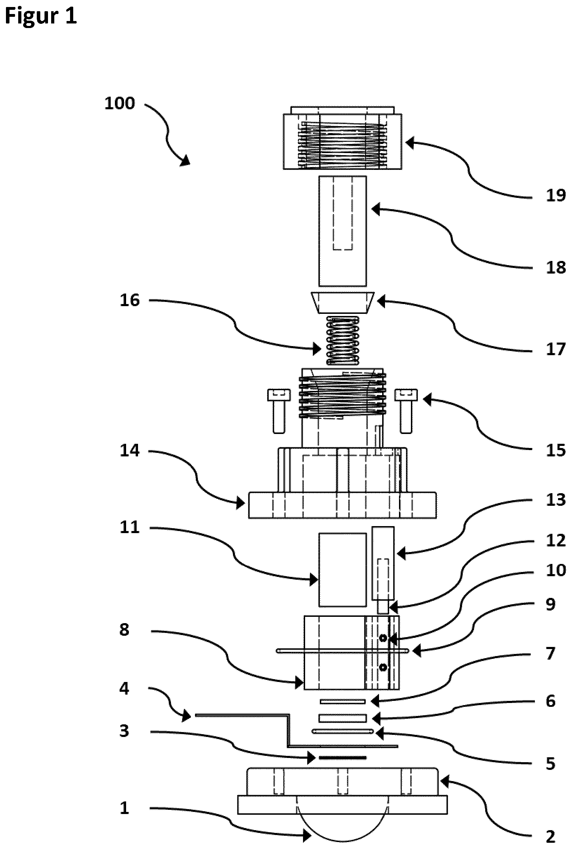

Die Figur 1 zeigt schematisch den Aufbau einer erfindungsgemäßen Zelle 100 im Querschnitt. Die Zelle 100 ist auf einen IR-Kristall/Prisma 1 angeordnet, welcher eine Aufnahme für einen IR-Kristall 2 aufweist. Von unten nach oben findet sich in der Zelle 100 eine Arbeitselektrode 3 mit einem Arbeitselektroden-Stromableiter 4. Dieser Teil des Zelle 100 kann über Dichtungsringe 5, 9 gegenüber der Umgebung abgedichtet werden. Im Aufnahmeraum befindet sich ein Elektrolyt 6, eine Arbeitselektrode 3 und eine Gegenelektrode 7. Dieser Aufnahmeraum kontaktiert oder wird von der Heizmanschette 8 umschlossen, welche ein Heizelement 13, beispielsweise in Form einer elektrischen Widerstandsheizung aufweist. Die Heizmanschette 8 kann die einzelnen funktionalen Teile über Madenschrauben 10 fixieren. Optional kann in der Heizmanschette 8 noch ein Temperaturfühler 12 angeordnet sein. Durch die Heizmanschette 8 verläuft ein erster Gegenelektrode-Stromableiter 11, welcher über ein Federelement 16 einen zweiten Gegenelektrode-Stromableiter 18 kontaktiert. Dieser Teil des Zelles 100 kann über eine Dichtung 17 abgedichtet und über eine Inbusschraube 15 mechanisch fixiert sein. Den Abschluss der Zelle 100 bildet die Verschraubung 19, welche für den mechanischen Zusammenhalt des ganzen Zellaufbaus 100 sorgt. In dieser Figur sind die elektrische Kontaktierung des Heizelementes 13 und des optional einsetzbaren Thermofühlers 12 nicht gezeigt. Der Übersichtlichkeit halber wurde auch der mögliche Einbau einer Referenzelektrode nicht dargestellt.

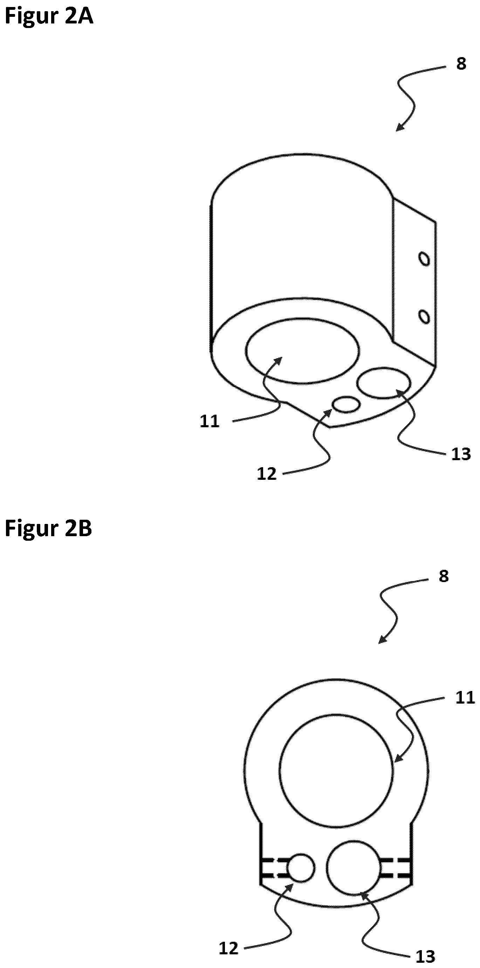

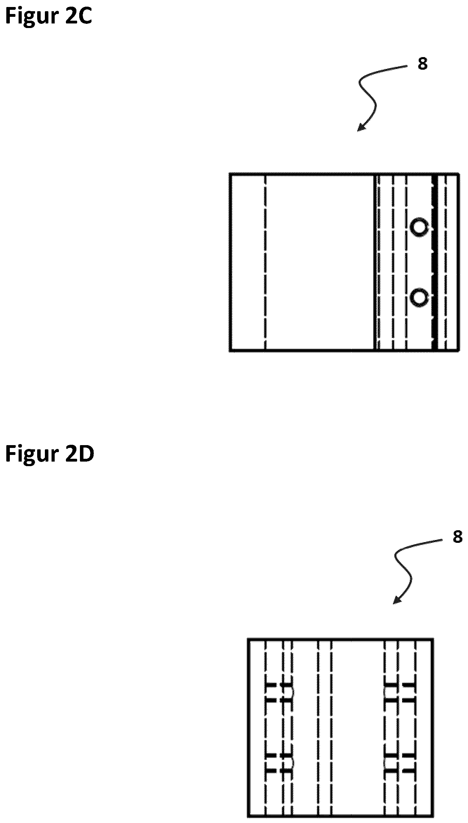

Die Figuren 2A-D zeigen in unterschiedlichen Ansichten der Heizmanschette 8, mit einer großen Bohrung für den ersten Gegenelektroden-Stromableiter 11, einer mittleren Bohrung für ein Heizelement 13, beispielsweise in Form einer elektrischen Widerstandsheizung, und einer kleinen Bohrung für den Temperaturfühler 12. Vier weitere kleine Bohrungen mit Gewinde sind für die Befestigung des Heizelementes 13 und des Temperaturfühlers mit Madenschrauben 10 eingezeichnet.

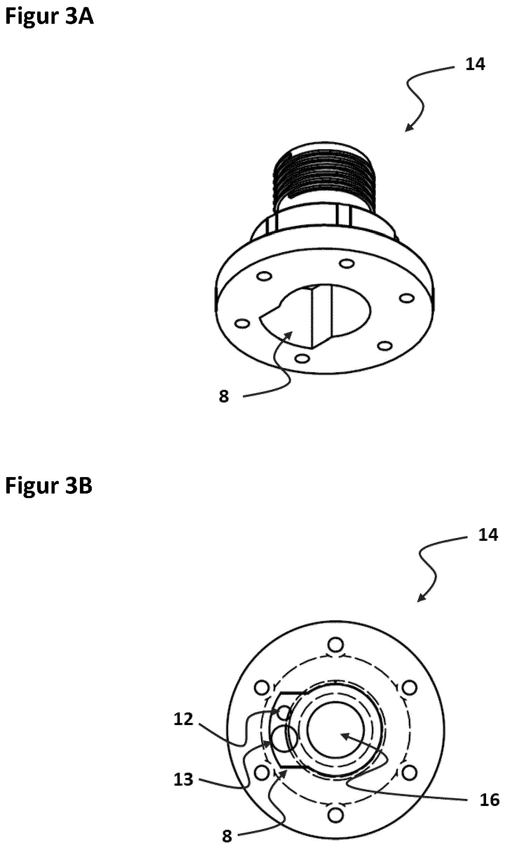

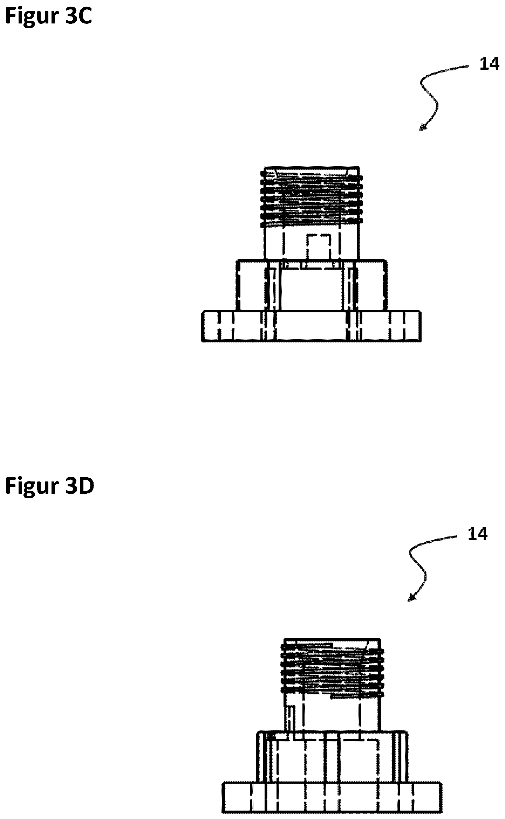

Die Figuren 3A-D zeigen das Zellgehäuse 14 in unterschiedlichen Ansichten. Das Zellgehäuse 14 kann eine große Bohrung am unteren Teil für die Heizmanschette 8 und eine mittlere Bohrung für das Federelement 16 und den zweiten Gegenelektroden-Stromableiter 18 aufweisen. Weiterhin können weitere Bohrungen für die Durchführung von Inbusschrauben 15 und zwei Bohrungen für die Kabeldurchführungen der Kabel des Heizelementes 13 und eines optionalen Temperaturfühlers 12 vorhanden sein. Die Bezugszeichen zeigen in diesen Fällen die Bohrungen für die entsprechenden funktionalen Teile und nicht die Teile selbst.

### Bezugszeichenliste

- 1: IR-Kristall/Prisma
- 2: Aufnahme für IR-Kristall
- 3: Arbeitselektrode
- 4: Arbeitselektroden-Stromableiter
- 5: Dichtungsring
- 6: Elektrolyt
- 7: Gegenelektrode
- 8: Heizmanschette
- 9: Dichtungsring
- 10: Madenschrauben
- 11: Erster Gegenelektroden-Stromableiter
- 12: Thermofühler
- 13: Heizelement (beispielsweise elektrische Widerstandsheizung)
- 14: Zellgehäuse
- 15: Inbusschraube
- 16: Federelement
- 17: Dichtung
- 18: Zweiter Gegenelektroden-Stromableiter
- 19: Verschraubung
- 100: Zelle

## Patentansprüche

1. Luftdichte Zelle zur ATR-FTIR-spektroskopischen Untersuchung elektrochemischer Elektroden- und Elektrolytvorgänge, wobei die Zelle (100) ausgehend von einer unteren Auflagefläche zu einem FTIR-Spektrometer bis hin zu einem oberen Abschluss der Zelle (100) umfasst: einen Arbeitselektroden-Stromableiter (4) eingerichtet zur elektrischen Kontaktierung einer Arbeitselektrode (3), einen Aufnahmeraum geeignet zur Aufnahme eines Elektrodenaufbaus umfassend eine Arbeitselektrode (3), einen Elektrolyten (6) und eine Gegenelektrode (7); sowie oberhalb des Aufnahmeraumes einen ersten Gegenelektroden-Stromableiter (11) eingerichtet zur elektrischen Kontaktierung der Gegenelektrode (7) des Elektrodenaufbaus, wobei der erste Gegenelektroden-Stromableiter (11) über ein Federelement (16) einen zweiten Gegenelektroden-Stromableiter (18) mechanisch und elektrisch kontaktiert, **dadurch gekennzeichnet, dass** eine Heizmanschette (8) aufweisend ein elektrisches Heizelement (13) zumindest einen Teiloberflächenbereich des ersten Gegenelektroden-Stromableiters (11) in thermisch leitender Verbindung kontaktiert.

2. Zelle nach Anspruch 1, wobei der erste Gegenelektroden-Stromableiter (11) zylindrisch ausgestaltet ist und die Heizmanschette (8) mindestens 70% der äußeren Mantelfläche des ersten Gegenelektroden-Stromableiters (11) kontaktiert.

3. Zelle nach einem der vorhergehenden Ansprüche, wobei der Aufnahmeraum zylindrisch ausgestaltet ist und die Heizmanschette (8) mindestens 70% der äußeren Mantelfläche des Aufnahmeraumes umfasst.

4. Zelle nach einem der vorhergehenden Ansprüche, wobei die Heizmanschette (8) dazu eingerichtet ist einen Thermofühler (12) aufzunehmen.

5. Zelle nach einem der vorhergehenden Ansprüche, wobei das elektrische Heizelement (13) eine elektrische Widerstandsheizung ist.

6. Zelle nach einem der vorhergehenden Ansprüche, wobei der erste Gegenelektroden-Stromableiter (11) zu größer oder gleich 80 Gew.-% und kleiner oder gleich 100 Gew.-% aus Kupfer besteht, wobei zumindest die Kontaktfläche des ersten Gegenelektroden-Stromableiter (11) zum Federelement (16) eine Goldbeschichtung aufweist.

7. Zelle nach einem der vorhergehenden Ansprüche, wobei der erste Gegenelektroden-Stromableiter (11) zylindrisch ausgestaltet ist und eine minimale Ausdehnung in Richtung der Zylinderachse von größer oder gleich dem 4fachen und kleiner oder gleich dem 10fachen bezogen auf die maximale Ausdehnung des Aufnahmeraumes aufweist.

8. Zelle nach einem der vorhergehenden Ansprüche, wobei das elektrische Heizelement (13) zu größer oder gleich 80 Gew.-% und kleiner oder gleich 100 Gew.-% aus Kupfer besteht und an der Oberfläche beschichtet ist, wobei die Beschichtung ausgewählt ist aus der Gruppe bestehend aus AlN, Al₂O₃, BN, Glimmer oder Mischungen mindestens zweier Verbindungen aus dieser Liste.

9. Zelle nach einem der vorhergehenden Ansprüche, wobei die Heizmanschette (8) von dem Arbeitselektroden-Stromableiter (4) elektrisch entkoppelt ist.

10. Zelle nach einem der vorhergehenden Ansprüche, wobei das Federelement (16) zu größer oder gleich 80 Gew.-% und kleiner oder gleich 100 Gew.-% aus Edelstahl besteht und auf der Oberfläche eine Goldbeschichtung aufweist.
